# EUROPEAN PATENT SPECIFICATION

(11) **EP 3 710 737 B1**
(45) Date of publication and mention of the grant of the patent: **10.01.2024**
(21) Application number: 18811653.7
(22) Date of filing: 13.11.2018
(51) Int. Cl.: F16L 59/02, F16L 59/22, C04B 30/02

(54) **FLEXIBLE AND THERMAL INSULATING SHEET**
FLEXIBLE UND WÄRMEDÄMMENDE FOLIE
FEUILLE D'ISOLATION THERMIQUE SOUPLE

(30) Priority: 13.11.2017 BE 201705824; 05.12.2017 BE 201705903
(43) Date of publication of application: 23.09.2020
(73) Proprietor: Microtherm NV, 9100 Sint Niklaas (BE)
(72) Inventor: DULLAERT, Kris, 9240 Zele (BE)
(74) Representative: Etex Services NV - Etex IPSC
(86) International application number: PCT/IB2018/058892
(87) International publication number: WO 2019/092673

(56) References cited:
- EP-A1- 0 022 581
- EP-A1- 0 290 677
- EP-A1- 0 790 366
- EP-A2- 0 038 063
- DE-U1- 9 418 369
- Etex Industry C/o Microtherm N.V.: "MICROTHERM SLATTED Technical Data Sheet A L S", , 30 September 2017 (2017-09-30), pages 1-2, XP055489794, Retrieved from the Internet: URL:https://www.promat-hpi.com/en/products /microporous/microtherm-slatted-1000r-prod ucts [retrieved on 2018-07-03] cited in the application

## Description

### Technical field

The present invention relates to flexible and thermal insulating sheets suitable for covering the inner and/or outer surface of a curved object and comprising a mixture comprising thermally insulating particles being aerogel particles, pyrogenic metal oxide particles or a combination of both. The invention also relates to use of such flexible and thermal insulating sheets for thermally insulating curved, for example cylindrical or conical objects.

### Prior art

Flexible and thermal insulating sheets for thermally insulating cylindrical or conical objects are known. An example of such a sheet is the product MICROTHERM^{®} SLATTED - 1000R by Microtherm NV (Sint Niklaas, Belgium), as specified in the relevant datasheet dated 30 September 2017.

### Summary of the invention

It is an object of the invention to provide flexible and thermal insulating sheets which are easy to produce in various dimensions, suitable for thermally insulating cylindrical or conical objects with different diameters.

One or several of the abovementioned objects and/or advantages is/are achieved by flexible and thermal insulating sheets according to the present invention.

According to a first aspect of the invention, a flexible and thermal insulating sheet is provided, as claimed in claim 1, which sheet is suitable for covering the inner and/or outer surface of a curved object. The sheet comprises a flexible support to which several thermally insulating strips are attached. Each of the strips, which strips comprise a mixture comprising thermally insulating particles, has
- two main faces which are in the shape of a rectangle, triangle or trapezium,
- two end faces and
- two lateral surfaces which connect the two main faces to each other in the longitudinal direction.

The cross section of each of the strips according to a plane at right angles to their main faces and at right angles to the longitudinal direction is a geometric shape selected from the group of rectangles, trapeziums and trapeziums with truncated corners between the hypotenuses and the longest side and wherein the corners of these geometric shapes may be rounded. The adjacent sides of every two strips positioned next to each other are substantially parallel and separated from one another at the location of the attachment to the flexible support. The thermally insulating particles are aerogel particles, pyrogenic metal oxide particles or a combination of both. The shape of each of the strips is provided by a mixture which is pressed into a shape, comprises thermally insulating particles and which is enclosed by a textile cloth.

According to a second aspect, the claimed flexible and thermally insulating sheet is used for thermally insulating curved, for example cylindrical or conical objects.

The flexible and thermal insulating sheets may be suitable, in particular, for covering a cylindrical or conical inner and/or outer surface of an object.

According to embodiments of the present invention, the cross section of each of the strips according to a plane at right angles to their main faces and at right angles to the longitudinal direction may be a geometric shape selected from the group of rectangles, symmetrical trapeziums and symmetrical trapeziums with truncated corners between the hypotenuses and the longest side, which shape is symmetrical in relation to a longitudinal direction. The corners may in each case be rounded. The radius of the rounding may vary from 0 mm (no rounding) to half the average thickness of the strip. The sector over which the corners are rounded may vary between 0° (no rounding) and 90°.

According to embodiments of the present invention, the adjacent sides of every two strips positioned next to each other may be separated from each other at the location of the attachment to the flexible support over a distance of at least 0.5 mm.

Preferably, the adjacent sides of every two strips positioned next to each other are separated from each other over a distance of at least 1mm, optionally at least 2 mm, for example at least 3 mm or even at least 4 mm. This distance is preferably less than 100 mm, for example less than 90 mm.

The "main faces of the strip" are the faces having the largest surface area of the volume of the strip. The "lateral faces of the strip" are the longest of the four faces which determine the volume of the strip, together with the two main faces, and adjoin the main faces along the boundary of the main faces in the longitudinal direction. The end faces are the head end faces of the volume of the strip which, together with the main faces and the lateral faces, determine the volume of the strips. The longitudinal direction of a strip is the average direction of the two lateral faces.

Thermally insulating means a thermal conduction of less than 50 mW/m*K. Preferably, the thermal conduction of the strips is less than 45 mW/m*K, preferably less than 30 mW/m*K. This thermal conduction is the thermal conduction at 300°C, measured according to ASTM C177.

Several strips means at least 2 strips, often 3, 4, 5, 6 or more strips, for example 4 to 10 strips or more.

The strips may have identical, similar or different shapes.

According to embodiments of the present invention, the strips may have substantially identical shapes.

The strips may have a different length in the longitudinal direction. The strips may be positioned on and attached to the flexible support in such a way that these strips cover a part or the entire surface area of the flexible support. The flexible support may actually have any desired external periphery. The periphery may be, for example, square or rectangular, triangular, parallelogram-shaped or trapezoidal, but also a random polygon or a shape having a flowing or partly flowing periphery. Optionally, the surface of the flexible support may be provided with openings or incisions, which openings or incisions are not covered with or bridged by strips.

According to embodiments of the present invention, the maximum thickness of the adjacent sides of two adjacent strips may be M, the distance between adjacent sides of two adjacent strips may be between 1 mm and M + 20 mm. Preferably, the distance between adjacent sides of two adjacent strips is between 1 mm and M +15 mm, such as between 1 mm and M +10 mm.

According to embodiments of the present invention, the strips may have an average thickness of 1 mm to 80 mm. Preferably, the average thickness is between 1,5 mm and 70 mm, preferably between 2mm and 60 mm. The average thickness is the average of the measured thicknesses over the entirety of the main faces.

According to embodiments of the present invention, the strips may have a substantially uniform thickness. A substantially uniform thickness means that the thickness of the strip is practically identical in every point of a main face. The expression thickness of a strip in a point of the main face is understood to mean the minimum distance of this point on the first main face to a point of the other main face. Strips having a substantially uniform thickness essentially have flat and practically parallel main faces. Optionally, the strips are provided with recesses and/or relatively thin spots which enable the sheet to fit around projecting elements or irregularities on the surface of the shape to be wrapped.

According to embodiments of the present invention, the strips may have a length of 20 mm to 1500 mm in the longitudinal direction. Preferably, this length is between 50 mm to 1200 mm. Different strips may have different lengths in this direction.

According to embodiments of the present invention, the strips may have a length of 10 mm to 1500 mm in a direction perpendicular to the longitudinal direction and parallel to the main faces. Preferably, this distance is between 20 and 1000 mm, for example between 100mm and 1000mm. Different strips may have different lengths in this direction.

According to embodiments of the present invention, the flexible support may be a textile cloth or film/foil.

Suitable textile cloths are preferably textile cloths based on glass and/or synthetic fibre, for example glass and/or synthetic fibre fabrics or glass and/or synthetic fibre nonwovens. In a preferred embodiment, the textile cloth is a woven glass fibre cloth, for example a glass fibre cloth made of glass fibres of the type E-glass, S-glass, silica glass, quartz glass or combinations of these fibres, which cloth may or may not be siliconised.

Suitable films/foils may be, for example, polymer or aluminium films/foils. The thickness of the film/foil is preferably between 0.01 mm and 1 mm.

The term flexible is understood to mean that the support can be wrapped around a cylindrical surface, which surface has a bending radius of 10 cm. Optionally, the support may be wrapped around a cylindrical surface, which surface has a bending radius of 5 cm. Optionally, the support may be wrapped around a cylindrical surface, which surface has a bending radius of 1 cm.

According to embodiments of the present invention, the strips may be attached to the flexible support by means of adhesive and/or double-sided tape. The adhesive is preferably based on water glass (alkali-silicate) (e.g. Na water glass, K water glass, Li water glass or combinations of such water glass), phosphate-based adhesive, organic adhesives. Optionally, the water glass-based adhesive comprises minerals, for example clay. Preferably, the adhesive, or the adhesive of the double-sided tape, is temperature-resistant, preferably highly resistant to higher temperatures. Resistant to higher temperatures means that the bond does not substantially change at temperatures between room temperature and 100°C, between room temperature and 300°C. In an alternative form, hot-melt adhesive is used, for example thermoplastic or thermosetting hot-melt adhesive.

According to the present invention, the shape of each of the strips may be provided by a mixture which is pressed into shape and comprises thermally insulating particles. The mixture which is pressed into shape and comprises thermally insulating particles is enclosed by a textile cloth.

According to embodiments of the present invention, the mixture which comprises thermally insulating particles is first brought into a case consisting of textile cloth, after which the mixture is compressed in the cloth. Compression, optionally already in a case consisting of textile cloth, may take place in a wet or dry state. This casing may be a textile cloth which has been stitched closed to form a case, for example a glass or synthetic fibre cloth, for example a woven or nonwoven cloth.

According to embodiments of the present invention, the geometric shape of the cross section may have rounded corners.

According to embodiments of the present invention, the geometric shape of the cross section may be an optionally symmetrical trapezium, wherein the angle between each of the hypotenuses and the large side is between 30° and 90°. Preferably, this slope of the hypotenuse is between 45 and 90°.

According to embodiments of the present invention, the strips may be attached to the flexible support along the long side of their symmetrical trapezium cross section.

According to embodiments of the present invention, the thermally insulating particles may form part of a thermally insulating mixture, comprising:
- 30 to 90% by weight of thermally insulating particles;
- 1 to 50% by weight of infrared opacifier or absorbent;
- 0 to 30% by weight of staple fibres;
- 0 to 30% by weight of endothermal material;
- 0 to 20% by weight of microsilica.

Obviously, the composition of the mixture is preferably homogenous.

Preferably, the specific surface area of the thermally insulating particles is between 50 and 1000 m²/g.

The infrared opacifier or absorbent may be rutile (natural and/or synthetic), anatase, iron oxide, silicon carbide, carbon, graphite, zirconium and/or clay, or mixtures thereof.

The staple fibres are preferably fibres made of E glass, R glass, S glass, silicate fibres, alumina fibres, alkaline earth silicate fibres, aluminium silicate fibres, ceramic fibres and/or combinations of such fibres. Preferably, the fibres have a length of 1 to 12 mm and a thickness of 0.1 to 15 micron.

The endothermal material may be aluminium trihydrate (ATH), magnesium hydrate (MgOH), or gypsum, or mixtures thereof.

The microsilica (also known as silica fume) preferably has a specific surface area of 10 to 50 m²/g.

Pyrogenic metal oxide particles are, for example, pyrogenic aluminium oxide or pyrogenic silica.

According to embodiments of the present invention, the thermally insulating particles may comprise pyrogenic silica particles. Pyrogenic silica is also known as pyrogenic silicic acid. In general, the term "fumed silica" is used more commonly.

Aerogel particles may be metal oxide aerogels, for example silica aerogels, alumina aerogels, zirconia aerogels, titania aerogels, but also polymeric aerogels, or combinations thereof. Silica aerogels are preferably used. Aerogels may be xenogels, cryogels, pyrogels.

According to embodiments of the present invention, the thermally insulating particles may comprise silica aerogel particles.

According to embodiments of the present invention, the mixture in the strips may have a density of between 50 and 500 kg/m³.

The advantage of these flexible and thermal insulating sheets is that they are suitable for covering, optionally wrapping, curved, for example cylindrical, convex, dome-shaped or conical surfaces. During the sheeting procedure, the flexible support is positioned in such a way that the flexible support is experiences a greater bending radius than the neutral line of the sheet. If the sheet is arranged on the side of the object, away from the point or axis of curvature, then the flexible support will push the strips against the surface. If the sheet is arranged on the side of the object, oriented towards the point or axis of curvature, the flexible support will push the strips against each other laterally. In both cases, the force exerted on the strips will cause the strips to be pushed against the wall to be covered.

For cylindrical surfaces, the sides of the strips may all run parallel. In this case, the strips may each have two practically parallel main faces which are in the shape of a rectangle.

The flexible and thermal insulating sheet may be curved around an axis which runs parallel with the longitudinal direction of the strips. By allowing this axis to coincide with the axis of the cylindrical object to be covered or sheeted (for example tube or pipeline, steam pipe, gas pipe, line for chemical or petrochemical products, etc.), the sheet is able to bend around the outer wall of this object. The small distance between two adjacent ribbons makes it possible for the lateral faces of each of the ribbons to click towards each other, as a result of which this bending of the sheet does not result in the materials from which the strips are made being subjected to excessive pressure or tensile stress, which could possibly lead to these materials bursting, breaking or being damaged.

For conical surfaces, all of the sides of the strips may be non-parallel. In this case, the strips will each have two practically parallel main faces which are in the shape of a rather elongate trapezium.

The flexible and thermal insulating sheet may be curved around an axis which is oriented from the one head end side to the other head end side. By making this axis coincide with the axis of the cylindrical object to be covered or sheeted (for example tube or pipeline, steam pipe, gas pipe, line for chemical or petrochemical products, etc.), the sheet is able to bend around the outer wall of this object.

For other curved surfaces, for example convex shapes or domes, combinations of different shapes, lengths and cross sections may be selected.

The advantage of these products also provides an advantage during the production of such sheets. If sheets have to be made for sheeting objects of different diameters, it suffices to simply attach the number of necessary strips next to one another to a supporting surface. In this way, it is easy to produce made-to-measure different sheets by choosing this number of strips.

Smaller widths of strips, optionally combined with a suitable distance between the strips laterally and/or the thickness of the strips, makes it possible to make the sheet suitable for objects of larger or smaller diameters to be encased.

According to a second aspect of the invention, the use of a flexible and thermal insulating sheet according to the first aspect of the invention is provided for thermally insulating the inner and/or outer surface of a curved, preferably cylindrical, convex, dome-shaped or conical object.

According to embodiments of the present invention, the object may be selected from the group consisting of tubes, cones, bends, domes and/or ovens.

These objects may form part of chimneys or exhausts, pipe systems, for example pipe systems for transporting heated or cooled fluid, for example in the chemical or petrochemical industry, compensators, washing towers, for example gas washing towers, or ducts for conveying hot liquid streams, for example streams of molten glass, as well as so-called "feeder bowls", being the end part of a duct for conveying molten glass where the glass blobs are formed which are subsequently transformed into glass objects, for example bottles.

According to embodiments of the present invention, the flexible and thermal insulating sheet may be used to cover a part of the interior surface of an oven wall.

The independent and dependent claims describe specific and preferred characterizing features of the embodiments of the invention.

The above-described and other characterizing features, properties and advantages of the present invention will be explained by means of the following exemplary embodiments, optionally in combination with the drawings. The description of these exemplary embodiments is provided for clarification and is not intended to limit the scope of the invention. The reference numerals in the following description refer to the drawings.

### Brief description of the figures

Fig. 1 diagrammatically shows a plan view of an embodiment of a flexible and thermal insulating sheet according to the invention.
Fig. 2 diagrammatically shows a representation of a part of the cross section of this sheet in Fig. 1, according to the plane AA'.
Fig. 3 diagrammatically shows a representation of a detail of the strips, part of a flexible and thermal insulating sheet according to the invention.
Fig. 4 diagrammatically shows a representation of a part of a cross section of an alternative sheet according to the plane AA'.
Fig. 5 diagrammatically shows a representation of a sheet according to the invention which was wound around a cylindrical object.
Figs. 6a to 6g are diagrammatic representations of sheets according to the invention.
Figs. 7a and 7b diagrammatically show a representation of a sheet according to the invention which was used to cover the inside of a cylindrical oven.

Identical reference numerals refer to identical, similar or analogous elements in the other figures. The figures are diagrammatic representations and not to scale.

### Description of exemplary embodiments

The present invention will be described below by means of specific embodiments.

It should be noted that the term "comprising", such as used, for example, in the claims, should not be interpreted in a limiting sense, limiting to the elements, characterizing features and/or steps mentioned thereafter. The term "comprising" does not exclude the presence of other elements, characterizing features or steps.

Thus the scope of an expression "an object comprising the elements A and B" is not limited to an object which only contains the elements A and B.

The scope of an expression "a method comprising the steps A and B" is not limited to a method which only contains the steps A and B.

In the light of the present invention, these expressions only mean that the relevant elements and steps, respectively, for the invention are the elements and steps A and B, respectively.

In the following specification, reference is made to "an embodiment" or "the embodiment". Such references mean that a specific element or characterizing feature, described by means of this embodiment, is comprised in at least this one embodiment.

However, the occurrence of the terms "in an embodiment" or "in one embodiment" at various locations in this description, does not necessarily refer to the same embodiment, although it may however refer to the same embodiment.

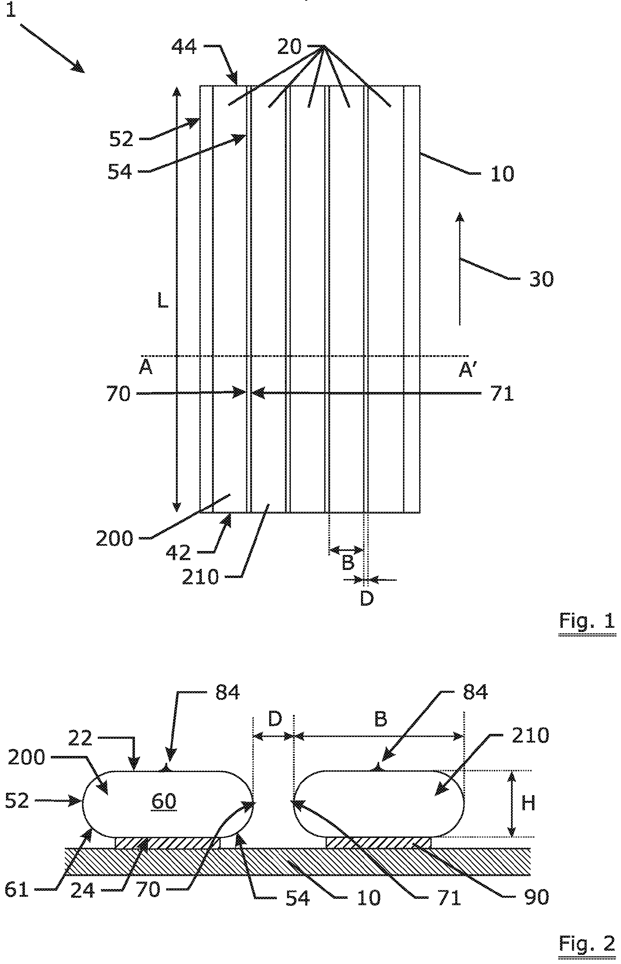

A plan view of an embodiment of a flexible and thermal insulating sheet according to the invention is shown in Fig. 1. Fig. 2 shows a part of the cross section of this sheet according to the plane AA'.

A flexible and thermal insulating sheet 1 comprises a flexible support 10 to which five thermally insulating and essentially flat strips 20 are attached. In this embodiment, each of the strips 20 has two practically parallel main faces 22 and 24 which are in the shape of a rectangle, which shape is symmetrical with respect to a longitudinal direction 30. The longitudinal directions of the strips are parallel. Each of the strips 20 also has two end faces 42 and 44 and two lateral faces 52 and 54.

The cross section of the sheet according to the plane AA', at right angles to the main faces 22 and 24 and at right angles to the longitudinal direction 30, is shown in Fig. 2. The cross section of each of the strips 20 according to AA' is a geometric shape selected from the group of rectangles, symmetrical trapeziums and symmetrical trapeziums with truncated corners between the hypotenuses and the longest side. In this embodiment, this is a rectangular shape 60 with rounded corners 61. The rounding of the corner is half the thickness of the strip and this over 90°. Reference numeral 84 denotes the stitching seam of a textile cloth, in this case a glass fibre fabric in the form of a case which has been filled with pyrogenic silicic acid, following which this combination was pressed to form the strip itself.

As can be seen in Figs. 1 and 2, the adjacent sides 70 and 71 of every two strips 200 and 210 positioned next to each other are substantially parallel. At the location of the attachment to the flexible support, the adjacent sides 70 and 71 are separated from one another over a distance D of 1 mm. Each strip has a thickness H of 18 mm, a length L of 520 mm and a width B of 119 mm.

In an alternative embodiment, in which the sheet is suitable for wrapping a conical object, the two practically parallel main faces have a symmetrical trapezoidal shape. Also in this case, the adjacent sides of every two strips positioned next to each other will be situated substantially parallel and at a similar small distance apart. The longitudinal directions of the strips do not run parallel, but, rather, radially from an imaginary central point.

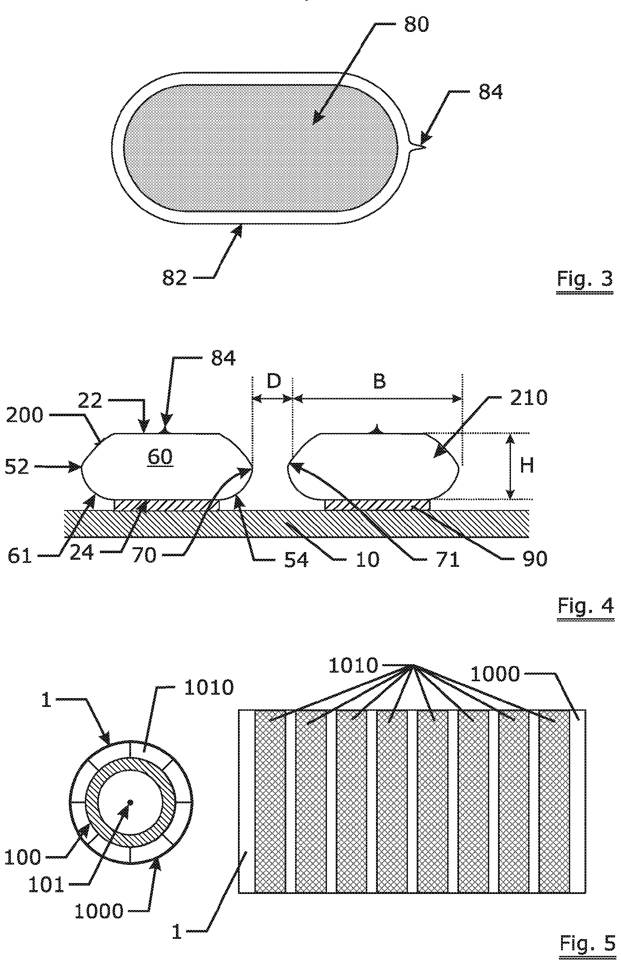

Each strip 20 is a strip as shown in Fig. 3. A pressed volume 80 comprises a mixture comprising thermally insulating particles, in this embodiment pyrogenic silicic acid, with a specific surface of the thermally insulating particles of between 50 and 1000 m²/g. Opacifying particles and glass fibres were added to this pressed volume 80. All products to be pressed are filled into a case made from stitched glass fibre fabric 82. The stitching is denoted by reference numeral 84. The glass fibre fabric is made from glass fibres of type E glass, S glass, silica glass, quartz glass or combinations of these fibres. In a preferred embodiment, an E glass fibre woven cloth is used. The products are pressed, together with the textile cloth, into the shape of the beam-shaped strip. Pressing takes place up to a density of 140 to 500 kg/m³, preferably up to a density of 220 to 300 kg/m³.

The strips have a thermal conductivity of less than 33 mW/mK. According to different embodiments, the average thickness of the strips is between 3 and 50mm.

By means of a glue 90, for example based on water glass (more in particular Na water glass or sodium silicate), the strips 20 are glued onto a flexible support 10, next to one another and at an intermediate distance of approximately 1 mm, said support being a woven glass fibre fabric made of glass fibres of type E glass, S glass, silica glass, quartz glass or combinations of these fibres, which cloth is optionally siliconised. Preferably, the cloth used is the same as the cloth used to produce the strips.

In this embodiment, all strips are of equal length and equal width. In an alternative embodiment, the strips may differ from one another with regard to length and/or width. Moreover, in this embodiment, all pairs of strips are separated from one another at the same distance. In an alternative embodiment, the separation between each pair of strips may differ. These provisions make it possible to match the sheet with more complicated curved surfaces.

An alternative to using glue is the use of a double-sided tape.

This tape may coincide in a longitudinal direction with each of the strips and be applied to the side of the strip to be attached, after which the strip is fitted to the flexible support. This tape may also coincide with each of the strips in the longitudinal direction and be fitted to the flexible support, after which the side of the strip which is to be attached is moved onto the tape. This tape may also be fitted to the flexible support in a transverse direction with respect to each of the strips, after which the side of the strip to be attached is moved onto the various tapes. In the latter case, the strips are attached to the flexible support by means of different lengths of double-sided tape.

An alternative embodiment of the flexible support is the use of an aluminium or polymer film/foil, for example an aluminium film/foil.

An alternative cross section of the strips is shown in Fig. 4. Each strip has a cross section according to a symmetrical trapezium with truncated corners between the hypotenuses and the longest side. The angle between the hypotenuse and the long side is approximately 45°.

The flexible and thermal insulating sheet 1 may be wrapped around a cylindrical object 100, for example a transport medium for transporting a heated fluid, as shown in Fig. 5. The sides of the sheet are curved around an axis 101, which axis is parallel with the longitudinal direction of the strips. By ensuring this axis coincides with the axis of the cylindrical object 100 to be covered or sheeted, the sheet 1 is able to curve around the outer wall of this object. In this case, the flexible support 1000 is situated on the outer side of the sheet and the strips 1010 contact the object 100 to be covered, for example a tube. The flexible support 1000 has a rectangular periphery and the strips 1010 cover practically the entire surface of the flexible support 1000.

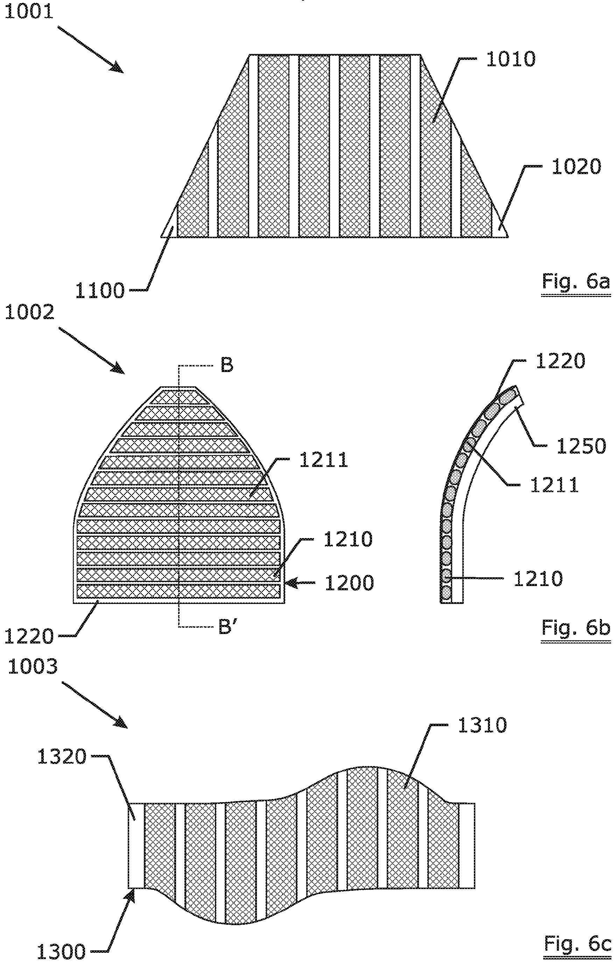

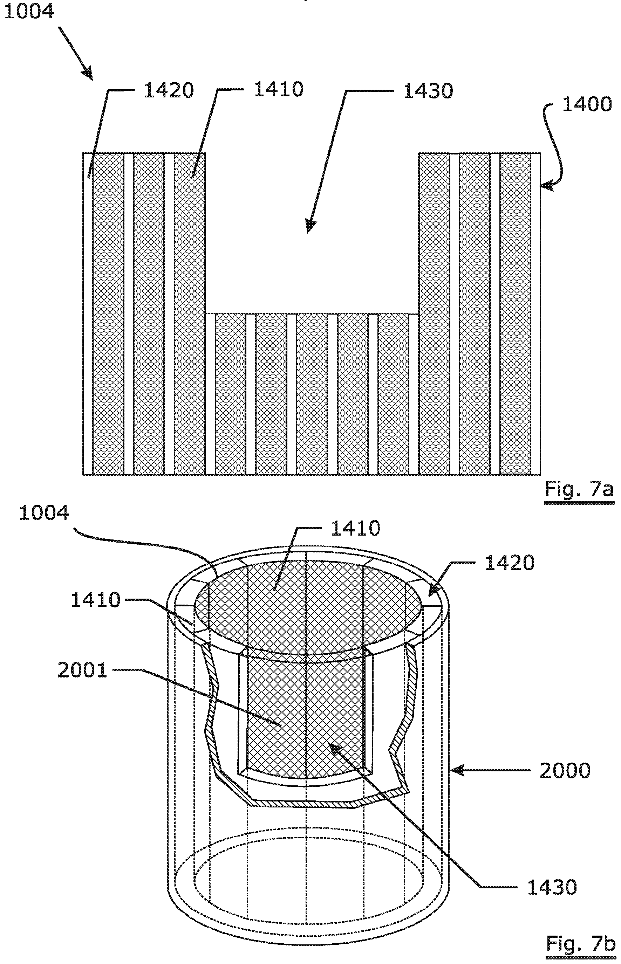

Alternative embodiments of sheets (1001, 1002, 1003, 1004, 1005, 1006, 1007, 1008) are shown in Figs. 6a to 6g and 7a and b. The flexible supports have different shapes, for example trapezoidal (1100), a shape with one or two partly curved sides (1200, 1600, 1700, 1800), an entirely irregular shape (1300) or the shape (1400) of, for example, a rectangle with an incision. The strips, which may have identical or different shapes, lengths and/or widths (1110, 1210, 1211, 1310, 1410, 1610, 1710, 1810) cover a large part of the flexible supports (1120, 1220, 1320, 1420, 1520, 1620, 1720, 1820). This choice of shapes of flexible supports and directions and shapes of strips ensures that different shapes of curved objects can be covered.

The embodiment of Fig. 6b may be used, for example, to cover, for example, the outer side of a dome-shaped surface 1250, as shown according to cross section BB'. The piece with strips 1210, in which the strips are narrower than the strips 1211, is used to cover the more cylindrical part of the surface 1250. The piece with strips 1211 is then used again to cover the cupola of the dome.

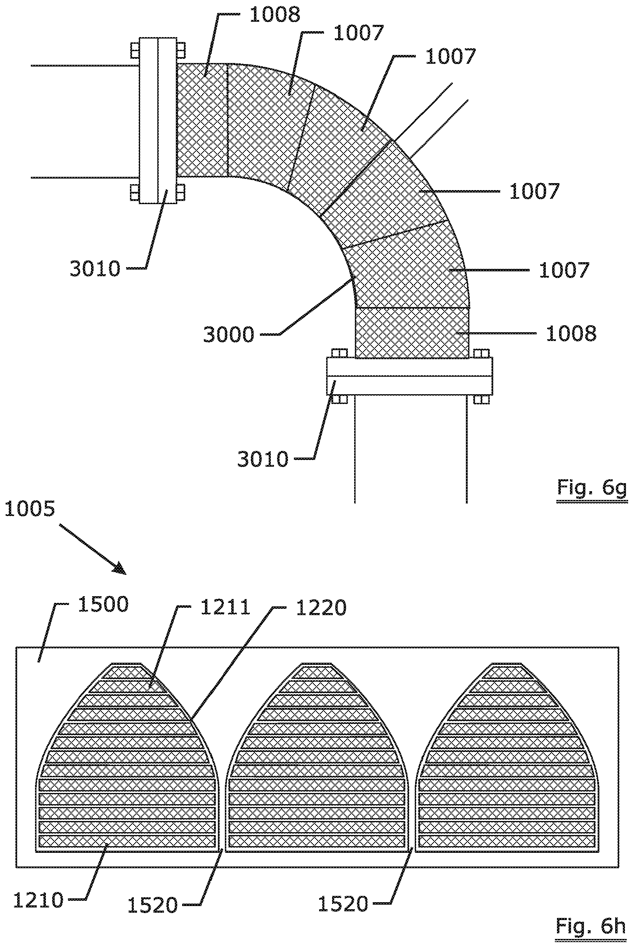

A plurality of groups of strips may also be provided on one and the same flexible support 1520 of a sheet 1005, as is shown in Fig. 6h.

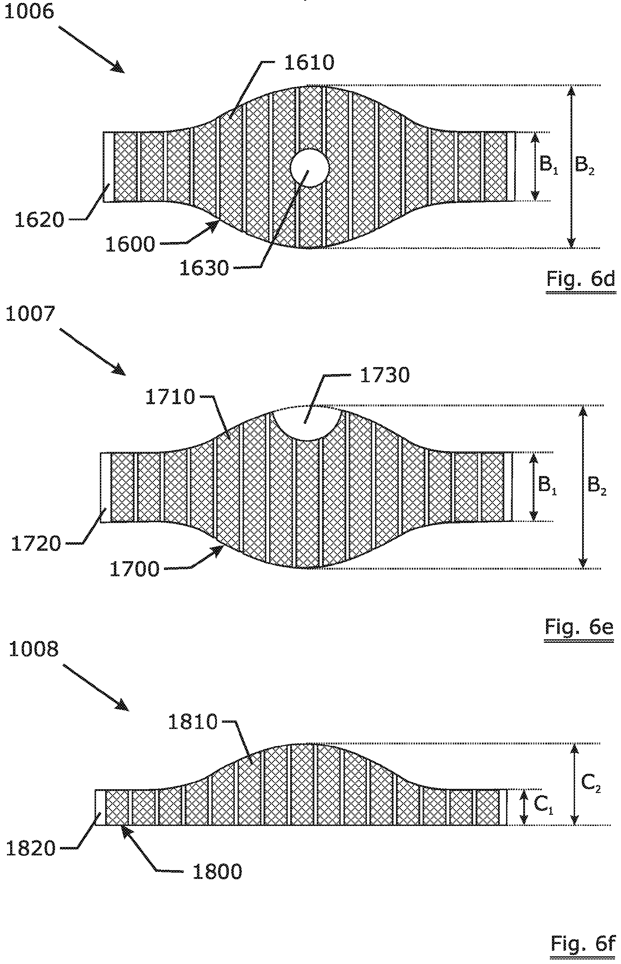

The sheet 1006 according to the embodiment of Fig. 6d may be used, for example, to cover a bend segment of a sheet for covering a tube, wherein an additional line may optionally have to be comprised in the bend. In order to allow this line to pass through the sheet, an opening 1630 is optionally provided. The bend segment may be a part of a segmented, for example welded tube, or a support, or may be a part of a drawn tube. Fig. 6e shows an alternative for a sheet 1007 to cover a bend segment, which may cooperate with a sheet 1008 as shown in Fig. 6f. Again, an opening 1730 may be provided in order to accommodate an additional line which joins onto the bend to be covered. The maximum width B2 of the sheets 1006 and 1007 corresponds to the length of the tube to be covered in the axial direction on the outer side of the curve of the bend segment. The minimum width B1 of the sheets 1006 and 1007 corresponds to the length of the tube to be covered in the axial direction on the inner side of the curve of the bend segment.

The sheet 1008 as shown in Fig. 6f is used around the start of the bends of the tube. The maximum height C2 is typically only half the maximum height B2 of the other sheets 1006 or 1007, often in the case where a flange is provided directly after the bend in the tube in order to couple the bend to a straight piece of tube. The minimum width C1 corresponds to the length of the tube to be covered in the axial direction on the inner side of the curve of the first or last bend segment. However, for example in the case of a welded or drawn tube, the length C1 may be made longer in order to insulate a part of the other tubing.

The use of the sheets 1007 and 1008 is shown in Fig. 6g. Two sheets 1008 are used to cover the start of the bend of a tube 3000 next to the respective flanges 3010. The bend itself is divided into segments which are each covered with a sheet 1007. It goes without saying that only the segment which has to accommodate an additional line is provided with a suitable opening 1730.

As is shown in Fig. 7a and 7b, the inner side of a combustion device 2000 (only illustrated partly for the sake of the clarity of the figure), which combustion device is provided with a burning glass 2001, is covered with a sheet 1004. The strips 1410 have a longitudinal direction in the axial direction of the cylindrical combustion device 2000. The flexible support 1420 is placed against the inner side of the combustion device wall while the strips 1410 are laterally pushed against each other. At the location of the burning glass 2001, the incision 1430 is positioned, so that the view into the combustion device is maintained.

## Claims

1. Flexible and thermal insulating sheet (1), suitable for covering the inner and/or outer surface of a curved object (100) and comprising thermally insulating particles being aerogel particles, pyrogenic metal oxide particles or a combination of both,
wherein said sheet (1) comprises a flexible support (10) to which several thermally insulating strips (20, 200, 210) are attached, each of the strips, which strips comprise a mixture comprising said thermally insulating particles, has:
• two main faces (22, 24) which are in the shape of a rectangle, triangle or trapezium,
• two end faces (42, 44) and
• two lateral surfaces (52, 54),
the cross section of each of the strips (20, 200, 210) according to a plane at right angles to their main faces (22, 24) and at right angles to the longitudinal direction (30) is a geometric shape, selected from the group of rectangles (60), trapeziums and trapeziums with truncated corners between the hypotenuses and the longest side,
wherein the adjacent sides (70, 71) of every two strips (20; 200, 210) positioned next to each other are substantially parallel and are separated from each other at the location of the attachment to the flexible support (10), ,
wherein the shape of each of the strips (20, 200, 210) is provided by a mixture which is pressed into a shape, comprises thermally insulating particles and which is enclosed by a textile cloth (82).

2. Flexible and thermal insulating sheet (1) according to Claim 1, wherein the cross section of each of the strips (20) according to a plane at right angles to their main faces (22, 24) and at right angles to the longitudinal direction (30) is a geometric shape selected from the group of rectangles (60), symmetrical trapeziums and symmetrical trapeziums with truncated corners between the hypotenuses and the longest side, which shape is symmetrical in relation to a longitudinal direction (30).

3. Flexible and thermal insulating sheet (1) according to Claim 1 or 2, wherein the adjacent side (70, 71) of every two strips (200, 210) positioned next to each other are separated from each other at the location of the attachment to the flexible support (10) over a distance (D) of at least 0.5 mm.

4. Flexible and thermal insulating sheet (1) according to one of the preceding claims, wherein the strips (20, 200, 210) have an average thickness of 1 mm to 80 mm.

5. Flexible and thermal insulating sheet (1) according to one of the preceding claims, wherein the strips (20, 200, 210) have a length of 20 mm to 1500 mm in the longitudinal direction (30).

6. Flexible and thermal insulating sheet (1) according to one of the preceding claims wherein the flexible support (10) is a textile cloth or film/foil.

7. Flexible and thermal insulating sheet (1) according to one of the preceding claims, wherein the strips (20, 200, 210) are attached to the flexible support (10) by means of adhesive (90) and/or double-sided tape.

8. Flexible and thermal insulating sheet (1) according to one of the preceding claims, wherein the geometric shape (60) of the cross section has rounded corners (61).

9. Flexible and thermal insulating sheet (1) according to one of the preceding claims, wherein the thermally insulating particles form part of a thermally insulating mixture comprising:
• 30 to 90% by weight of thermally insulating particles;
• 1 to 50% by weight of infrared opacifier or absorbent;
• 0 to 30% by weight of staple fibres;
• 0 to 30% by weight of endothermal material;
• 0 to 20% by weight of microsilica.

10. Flexible and thermal insulating sheet (1) according to one of the preceding claims, wherein the thermally insulating particles comprise pyrogenic silica particles or silica aerogel particles.

11. Flexible and thermal insulating sheet (1) according to one of the preceding claims, wherein the mixture in the strips (20, 200, 210) has a density of between 50 and 500 kg/m³.

12. Use of a flexible and thermal insulating sheet (1) according to one of the preceding claims for thermally insulating the inner and/or outer surface of a curved object (100).

13. Use of a flexible and thermal insulating sheet (1) according to Claim 12, wherein the object (100) is selected from the group consisting of tubes (100), cones, bends (3000), domes (1250) and/or ovens (2000).

14. Use of a flexible and thermal insulating sheet (1) according to Claim 12 or 13, wherein the flexible and thermal insulating sheet (1) is used for covering a part of the inner surface of an oven wall (2000).

## Patentansprüche

1. Flexible und wärmedämmende Bahn (1), die zum Abdecken der Innen- und/oder Außenoberfläche eines gekrümmten Objekts (100) geeignet ist, und umfassend wärmedämmende Partikel, die Aerogelpartikel, pyrogene Metalloxidpartikel oder eine Kombination von beiden sind,
wobei die Bahn (1) einen flexiblen Träger (10) umfasst, an dem mehrere wärmedämmende Streifen (20, 200, 210) angebracht sind, wobei jeder der Streifen, wobei die Streifen eine Mischung umfassend die wärmedämmenden Partikel umfassen, aufweist:
• zwei Hauptflächen (22, 24), die in der Form eines Rechtecks, eines Dreiecks oder eines Trapezes sind,
• zwei Stirnflächen (42, 44) und
• zwei Seitenoberflächen (52, 54),
wobei der Querschnitt jedes der Streifen (20, 200, 210) gemäß einer Ebene in rechten Winkeln zu ihren Hauptflächen (22, 24) und in rechten Winkeln zu der Längsrichtung (30) eine geometrische Form ist, die ausgewählt ist aus der Gruppe von Rechtecken (60), Trapezen und Trapezen mit abgestumpften Ecken zwischen den Hypotenusen und der längsten Seite,
wobei die benachbarten Seiten (70, 71) von jeweils zwei nebeneinander positionierten Streifen (20; 200, 210) im Wesentlichen parallel sind und an der Stelle der Anbringung an dem flexiblen Träger (10) voneinander getrennt sind,
wobei die Form jedes der Streifen (20, 200, 210) durch eine Mischung bereitgestellt wird, die in eine Form gepresst wird, wärmedämmende Partikel umfasst und die durch ein Textilgewebe (82) umschlossen ist.

2. Flexible und wärmedämmende Bahn (1) nach Anspruch 1, wobei der Querschnitt jedes der Streifen (20) gemäß einer Ebene in rechten Winkeln zu ihren Hauptflächen (22, 24) und in rechten Winkeln zu der Längsrichtung (30) eine geometrische Form ist, die ausgewählt ist aus der Gruppe von Rechtecken (60), symmetrischen Trapezen und symmetrischen Trapezen mit abgestumpften Ecken zwischen den Hypotenusen und der längsten Seite, wobei die Form symmetrisch in Bezug auf eine Längsrichtung (30) ist.

3. Flexible und wärmedämmende Bahn (1) nach Anspruch 1 oder 2, wobei die benachbarte Seite (70, 71) von jeweils zwei nebeneinander positionierten Streifen (200, 210) an der Stelle der Anbringung an dem flexiblen Träger (10) über einen Abstand (D) von mindestens 0,5 mm voneinander getrennt sind.

4. Flexible und wärmedämmende Bahn (1) nach einem der vorstehenden Ansprüche, wobei die Streifen (20, 200, 210) eine durchschnittliche Dicke von 1 mm bis 80 mm aufweisen.

5. Flexible und wärmedämmende Bahn (1) nach einem der vorstehenden Ansprüche, wobei die Streifen (20, 200, 210) eine Länge von 20 mm bis 1500 mm in der Längsrichtung (30) aufweisen.

6. Flexible und wärmedämmende Bahn (1) nach einem der vorstehenden Ansprüche, wobei der flexible Träger (10) ein Textilgewebe oder ein Film/eine Folie ist.

7. Flexible und wärmedämmende Bahn (1) nach einem der vorstehenden Ansprüche, wobei die Streifen (20, 200, 210) mittels eines Klebstoffs (90) und/oder doppelseitigen Klebebands an dem flexiblen Träger (10) angebracht sind.

8. Flexible und wärmedämmende Bahn (1) nach einem der vorstehenden Ansprüche, wobei die geometrische Form (60) des Querschnitts abgerundete Ecken (61) aufweist.

9. Flexible und wärmedämmende Bahn (1) nach einem der vorstehenden Ansprüche, wobei die wärmedämmenden Partikel einen Teil einer wärmedämmenden Mischung bilden, umfassend:
• zu 30 bis 90 Gew.-% wärmedämmende Partikel;
• zu 1 bis 50 Gew.-% Infrarottrübungsmittel oder -absorptionsmittel;
• zu 0 bis 30 Gew.-% Stapelfasern;
• zu 0 bis 30 Gew.-% endothermes Material;
• zu 0 bis 20 Gew.-% Microsilica.

10. Flexible und wärmedämmende Bahn (1) nach einem der vorstehenden Ansprüche, wobei die wärmedämmenden Partikel pyrogene Siliciumdioxidpartikel oder Siliciumdioxidaerogelpartikel umfassen.

11. Flexible und wärmedämmende Bahn (1) nach einem der vorstehenden Ansprüche, wobei die Mischung in den Streifen (20, 200, 210) eine Dichte zwischen 50 und 500 kg/m³ aufweist.

12. Verwendung einer flexiblen und wärmedämmenden Bahn (1) nach einem der vorstehenden Ansprüche zum Wärmedämmen der Innen- und/oder Außenoberfläche eines gekrümmten Objekts (100).

13. Verwendung einer flexiblen und wärmedämmenden Bahn (1) nach Anspruch 12, wobei das Objekt (100) ausgewählt ist aus der Gruppe bestehend aus Rohren (100), Glocken, Rohrbögen (3000), Kuppeln (1250) und/oder Öfen (2000).

14. Verwendung einer flexiblen und wärmedämmenden Bahn (1) nach Anspruch 12 oder 13, wobei die flexible und wärmedämmende Bahn (1) zum Abdecken eines Teils der Innenoberfläche einer Ofenwand (2000) verwendet wird.

## Revendications

1. Feuille isolante (1) souple et thermique, appropriée pour recouvrir la surface interne et/ou externe d'un objet incurvé (100) et comprenant des particules thermiquement isolantes étant des particules d'aérogel, des particules d'oxyde métallique pyrogène ou une combinaison des deux, ladite feuille (1) comprenant un support souple (10) auquel plusieurs bandes thermiquement isolantes (20, 200, 210) sont fixées, chacune des bandes comprenant un mélange comprenant lesdites particules thermiquement isolantes, a :
• deux faces principales (22, 24) qui sont en forme de rectangle, triangle ou trapèze,
• deux faces d'extrémité (42, 44) et
• deux surfaces latérales (52, 54),
la section transversale de chacune des bandes (20, 200, 210) selon un plan perpendiculaire à leurs faces principales (22, 24) et perpendiculaire à la direction longitudinale (30) est une forme géométrique, choisie dans le groupe des rectangles (60), trapèzes et trapèzes à coins tronqués entre les hypoténuses et le côté le plus long,
dans laquelle les côtés adjacents (70, 71) de toutes les deux bandes (20 ; 200, 210) positionnées les unes à côté des autres sont sensiblement parallèles et sont séparés l'un de l'autre à l'emplacement de la fixation au support souple (10),
dans laquelle la forme de chacune des bandes (20, 200, 210) est fournie par un mélange qui est pressé en une forme, comprend des particules thermiquement isolantes et qui est enfermée par une toile textile (82).

2. - Feuille isolante (1) souple et thermique selon la revendication 1, dans laquelle la section transversale de chacune des bandes (20) selon un plan perpendiculaire à leurs faces principales (22, 24) et perpendiculaire à la direction longitudinale (30) est une forme géométrique choisie dans le groupe des rectangles (60), trapèzes symétriques et trapèzes symétriques à coins tronqués entre les hypoténuses et le côté le plus long, forme qui est symétrique par rapport à une direction longitudinale (30).

3. - Feuille isolante (1) souple et thermique selon la revendication 1 ou 2, dans laquelle le côté adjacent (70, 71) de toutes les deux bandes (200, 210) positionnées les unes à côté des autres sont séparés l'un de l'autre à l'emplacement de la fixation au support souple (10) sur une distance (D) d'au moins 0,5 mm.

4. - Feuille isolante (1) souple et thermique selon l'une des revendications précédentes, dans laquelle les bandes (20, 200, 210) ont une épaisseur moyenne de 1 mm à 80 mm.

5. - Feuille isolante (1) souple et thermique selon l'une des revendications précédentes, dans laquelle les bandes (20, 200, 210) ont une longueur de 20 mm à 1500 mm dans la direction longitudinale (30).

6. - Feuille isolante (1) souple et thermique selon l'une des revendications précédentes, dans laquelle le support souple (10) est une toile ou un film/une feuille textile.

7. - Feuille isolante (1) souple et thermique selon l'une des revendications précédentes, dans laquelle les bandes (20, 200, 210) sont fixées au support souple (10) au moyen d'un adhésif (90) et/ou d'un ruban double face.

8. - Feuille isolante (1) souple et thermique selon l'une des revendications précédentes, dans laquelle la forme géométrique (60) de la section transversale présente des coins arrondis (61).

9. - Feuille isolante (1) souple et thermique selon l'une des revendications précédentes, dans laquelle les particules thermiquement isolantes font partie d'un mélange thermiquement isolant comprenant :
• 30 à 90 % en poids de particules thermiquement isolantes ;
• 1 à 50 % en poids d'agent opacifiant ou absorbant infrarouge ;
• 0 à 30 % en poids de fibres discontinues ;
• 0 à 30 % en poids de matériau endothermique ;
• 0 à 20 % en poids de microsilice.

10. - Feuille isolante (1) souple et thermique selon l'une des revendications précédentes, dans laquelle les particules thermiquement isolantes comprennent des particules de silice pyrogène ou des particules d'aérogel de silice.

11. - Feuille isolante (1) souple et thermique selon l'une des revendications précédentes, dans laquelle le mélange dans les bandes (20, 200, 210) présente une densité comprise entre 50 et 500 kg/m³.

12. - Utilisation d'une feuille isolante souple et thermique (1) selon l'une des revendications précédentes pour isoler thermiquement la surface interne et/ou externe d'un objet incurvé (100).

13. - Utilisation d'une feuille isolante souple et thermique (1) selon la revendication 12, dans laquelle l'objet (100) est choisi dans le groupe constitué de tubes (100), cônes, plis (3000), dômes (1250) et/ou fours (2000).

14. - Utilisation d'une feuille isolante souple et thermique (1) selon la revendication 12 ou 13, dans laquelle la feuille isolante souple et thermique (1) est utilisée pour couvrir une partie de la surface interne d'une paroi de four (2000).
